(19) Europäisches Patentamt
European Patent Office
Office européen des brevets

(11) **EP 2 450 862 B1**

(12) **FASCICULE DE BREVET EUROPEEN**

(45) Date de publication et mention
de la délivrance du brevet:
**10.09.2014 Bulletin 2014/37**

(51) Int Cl.:
***G08C 17/02*** *(2006.01)*   ***A63H 27/00*** *(2006.01)*
***H04L 29/06*** *(2006.01)*

(21) Numéro de dépôt: **11187637.1**

(22) Date de dépôt: **03.11.2011**

(54) **Procédé de transmission de commandes et d'un flux vidéo entre un drone et une télécommande par une liaison de type réseau sans fil**

Verfahren zur Übertragung von Steuerbefehlen und einem Videofluss zwischen einer Drohne und einem Fernsteuerungssystem über eine Verbindung vom Typ drahtloses Netz

Method for transmitting commands and a video stream between a drone and a remote control by a link such as a wireless network

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.11.2010 FR 1059146**

(43) Date de publication de la demande:
**09.05.2012 Bulletin 2012/19**

(73) Titulaire: **Parrot**
**75010 Paris (FR)**

(72) Inventeur: **Eline, Pierre**
**95400 Arnouville-Les-Gonesse (FR)**

(74) Mandataire: **Dupuis-Latour, Dominique**
**Bardehle Pagenberg**
**10, boulevard Haussmann**
**75009 Paris (FR)**

(56) Documents cités:
**EP-A1- 2 075 960     US-A1- 2009 185 617**

**Description**

L'invention concerne le pilotage des drones, notamment des drones à voilure tournante tels que les hélicoptères, quadricoptères et analogues.

Un exemple typique d'un tel drone est le *AR.Drone* de Parrot SA, Paris, France, qui est un quadricoptère équipé pour la navigation d'une série de capteurs (accéléromètres et gyromètres trois axes, altimètre) et d'une caméra de visée verticale produisant une image du terrain survolé. Le drone est également pourvu d'une caméra frontale captant une image de la scène vers laquelle se dirige le drone. Ce drone est piloté par l'utilisateur au moyen d'un dispositif de télécommande déportée reliée au drone par une liaison radio.

Le WO 2010/061099 A2 (Parrot SA) décrit en particulier un tel drone et son pilotage par l'intermédiaire d'un téléphone ou baladeur multimédia à écran tactile et accéléromètre intégré, par exemple un téléphone cellulaire de type *iPhone* ou un baladeur ou une tablette multimédia de type *iPod Touch* ou *iPad* (marques déposées de Apple Inc., USA). Ces appareils incorporent les divers organes de contrôle nécessaires à la détection des commandes de pilotage et à l'échange bidirectionnel de données avec le drone via une liaison sans fil de type réseau local *Wi-Fi* (IEEE 802.11) ou *Bluetooth* (marques déposées).

L'appareil de télécommande est pourvu d'un écran tactile affichant l'image captée par la caméra frontale, avec en superposition un certain nombre de symboles permettant l'activation de commandes par simple contact du doigt de l'utilisateur sur l'écran tactile.

Cette caméra permet notamment un mode de pilotage dit "pilotage immersif" dans lequel l'utilisateur, au lieu de piloter le drone en regardant celui-ci, utilise l'image de la caméra de la même façon que s'il se trouvait à bord du drone.

La liaison radio sans fil bidirectionnelle comprend une liaison montante (de la télécommande vers le drone) et une liaison descendante (du drone vers la télécommande) pour permettre la transmission de trames de données contenant :

- (de la télécommande vers le drone) les commandes de pilotage, ci-après simplement désignées "commandes", envoyées à intervalles réguliers et de façon systématique ;
- (du drone vers la télécommande) le flux vidéo issu de la caméra ; et
- (du drone vers la télécommande) en tant que de besoin, des données de vol recueillies par le drone ou des indicateurs d'état tels que : niveau des batteries, phase de vol (décollage, stabilisation automatique, etc.), altitude, défaut détecté, etc.

Pour la transmission des données, l'un des paramètres à considérer est la très grande variabilité du débit binaire ou *bitrate* de cette liaison radio (débit souvent appelé "bande passante"). Ce débit dépend notamment de l'éloignement entre le drone et la télécommande et de la présence ou non d'obstacles susceptibles de plus ou moins perturber la transmission des ondes radio. Lorsque le drone est à proximité de la télécommande, la qualité de la liaison est excellente et le débit disponible est donc élevé ; en revanche, ce débit se dégrade rapidement lorsque le drone s'éloigne (le rayon d'action peut en effet atteindre plusieurs dizaines de mètres) et lorsque viennent s'interposer des obstacles perturbateurs (buissons, objets divers, etc.).

Un autre paramètre à considérer est le besoin très élevé en débit vidéo de la liaison descendante, très supérieur à celui requis pour l'envoi des commandes ou des données de vol. Typiquement, la bande passante vidéo nécessaire est, même après compression des images, de l'ordre de 2,5 à 3 mégabits par seconde (Mbps), à comparer à quelques kilobits par seconde (kbps) pour l'envoi des commandes et des données de vol, qui ne sont que de simples valeurs numériques. En d'autres termes, sur ce qui est disponible, la vidéo occupe typiquement plus de 95 % du débit.

En cas de dégradation de la liaison radio, et donc du débit disponible, un conflit va apparaître entre le flux montant et le flux descendant. La réduction du débit, conjuguée avec les besoins importants du flux vidéo (liaison descendante) va avoir un impact sur le débit alloué notamment aux commandes (liaison montante).

Il va s'ensuivre une dégradation de la qualité de transmission de la liaison montante, avec risque de perte sporadique de trames contenant les commandes produites par la télécommande, ayant pour conséquence un contrôle du drone devenant très difficile.

Une solution à ce problème est décrite par le US2009/0185617 A, qui propose de mesurer la qualité de la liaison radio disponible à un instant donné, et de moduler le débit vidéo de la liaison descendante (jugée non prioritaire) en fonction du débit global disponible, de manière à toujours réserver un minimum de débit pour la liaison montante de transmission des commandes (jugée prioritaire). En d'autre termes, on prévoit de maintenir la qualité de la liaison montante en baissant en tant que de besoin le débit de la liaison descendante. En cas de réduction du débit disponible global, on pourra ainsi assurer l'envoi des commandes par la liaison montante dans les meilleures conditions.

Ce document propose d'utiliser comme métrique de qualité de la liaison divers paramètres typiques des liaisons radio, tels que RSSI (*Received Signal Strength Indicator*), SNR (*Signal-to-Noise Ratio*) et NF (*Noise Floor*). L'obtention de ces paramètres, qui sont des paramètres physiques mesurés, nécessite toutefois un *hardware* spécifique au niveau des circuits de réception du drone.

En outre, ils ne sont pas suffisamment spécifiques pour pouvoir garantir une réactivité maximale aux variations rapides du niveau de congestion du réseau.

En particulier, si l'on prend l'exemple du quadricoptère *AR.Drone* mentionné plus haut, celui-ci incorpore un dispositif de mise en sécurité de type "chien de garde" (*watchdog*) qui détecte l'interruption de la réception des commandes pendant un laps de temps supérieur à un délai maximum prédéterminée - par exemple l'absence de toute réception de trame de commandes depuis plus de 300 ms (pour des trames de commandes envoyées régulièrement toutes les 30 ms) ; en cas de déclenchement du chien de garde, le drone se met automatiquement en condition de stabilisation automatique en point fixe, dans l'attente du rétablissement de la liaison montante (par exemple l'utilisateur, voyant qu'il ne peut plus piloter le drone, se rapproche de celui-ci pour tenter de rétablir le contact).

En cas de déclenchements fréquents du chien de garde, le pilotage devient très difficile, du fait de la multiplication des passages en point fixe et de l'obligation pour l'utilisateur d'agir pour rétablir la liaison.

Le déclenchement du chien de garde induit de plus un effet pervers : en effet, le passage automatique en point fixe entraîne une stabilisation du drone et donc aussi de l'image captée par la caméra. Cette dernière va produire une image plus détaillée, nécessitant un débit supérieur pour la transmission en retour à la télécommande. Ce besoin supplémentaire en débit de transmission va provoquer un accroissement de la congestion du réseau, ce qui va à l'encontre du rétablissement de la liaison montante pour l'envoi des commandes.

Le but de l'invention est de trouver une solution aux problèmes ci-dessus, en définissant une métrique de qualité du réseau (i) qui puisse être produite par des moyens purement logiciels au sein du drone, sans recours à un hardware spécifique et (ii) qui soit suffisamment spécifique pour :

- éviter au maximum les situations de blocage de la réception des commandes dans la liaison montante, en raison d'une restriction du débit de la liaison montante du fait du flux vidéo de la liaison descendante ;
- fluidifier le pilotage en évitant les situations conduisant à un déclenchement du chien de garde ; et
- en cas de déclenchement du chien de garde, permettre de sortir rapidement de l'état stationnaire en évitant une aggravation de la congestion du réseau.

Le EP 2 075 960 A1 décrit un système de diffusion de flux video par paquets vers des téléphones portables, où le débit video est modulé de manière à limiter les situations de congestion du réseau, qui entraînent la perte d'un nombre important de paquets, qu'il faudra réémettre. Cette technique implique toutefois de disposer d'une liaison supplémentaire de contrôle dans le sens retour (liaison "RTCP-RR", du mobile vers le serveur), pour que le mobile, qui est capable de détecter la non-réception de paquets et de construire un rapport de réception/non-réception, puisse adresser ce rapport au serveur afin que ce dernier puisse réémettre les paquets perdus.

Cette configuration n'est pas celle de l'invention, qui ne prévoit pas de moyen pour vérifier la réception/non-réception des trames envoyées au drone, ni de liaison de contrôle additionnelle dans le sens retour (du drone vers la télécommande) pour gérer le débit de transmission des données envoyées par la télécommande, débit qui reste fixe.

Précisément, l'invention vise un procédé du type divulgué par le document US2009/0185617 A1 précité et correspondant au préambule de la revendication 1, c'est-à-dire un procédé de pilotage d'un drone à partir d'une télécommande distante par une liaison bidirectionnelle de type réseau sans fil. Le drone comprend une caméra video embarquée et des moyens de compression du flux video capté par cette caméra, aptes à produire un flux video compressé. La liaison bidirectionnelle comprend une liaison montante pour la transmission au drone de messages de commande sous forme de trames de données émises à intervalles prédéterminés, et une liaison descendante pour la transmission à la télécommande du flux video compressé produit par le drone. Le procédé de pilotage comprend des étapes de mesure d'un niveau de qualité de ladite liaison bidirectionnelle, de calcul d'un estimateur fonction du niveau de qualité mesuré, et de modulation du débit binaire du flux video compressé émis par le drone sur la liaison descendante, dans le sens d'une diminution de ce débit binaire lorsque l'estimateur indique une dégradation de la qualité de la liaison entre drone et télécommande, et *vice versa.*

Selon l'invention, comme énoncé dans la partie caractérisante de la revendication 1, la télécommande émet lesdits messages de commande de façon répétée à intervalles nominaux constants, et la mesure du niveau de qualité de la liaison bidirectionnelle est une mesure du niveau de qualité de la liaison montante opérée par le drone, à partir d'une mesure de la variabilité des intervalles séparant les trames successives effectivement reçues par le drone, déterminée à partir de la variance des intervalles séparant les trames successives effectivement reçues par le drone sur un nombre prédéterminé de trames antérieures sans mise en oeuvre d'une liaison de contrôle retour additionnelle de la télécommande vers le drone.

En d'autres termes, on estime la qualité de la liaison réseau par une mesure statistique opérée sur une commande montante de pilotage que l'on sait être émise de manière régulière : la variabilité de la réception de cette commande sera un indicateur particulièrement représentatif de la qualité globale de la liaison radio à un instant donné.

On notera tout particulièrement, de façon générale, que cette technique de mesure de la qualité de la liaison et de contrôle du débit réservé à la liaison descendante fait totalement abstraction de la couche réseau (au sens du modèle OSI), et s'appuie uniquement sur une analyse d'une liaison existante, à savoir la liaison montante pour la transmission des commandes.

Le mécanisme est complètement transparent pour la télécommande (qui n'a pas besoin d'envoyer au drone son état), il est mis en oeuvre intégralement au sein du drone par une simple analyse de la consommation du débit vidéo, et ceci indépendamment du type de réseau utilisé (*Wi-Fi, Bluetooth* ou autre) et sans qu'il soit nécessaire de mesurer le débit auquel fonctionne ce réseau.

La solution proposée permet de s'adapter à des difficultés de communication très variées (réseau encombré par d'autres appareils, signal affaibli par l'environnement, etc.), sans avoir à connaître la nature de ces perturbations et sans avoir à mesurer l'affaiblissement du débit qu'elles sont susceptibles d'introduire.

Les sous-revendications visent diverses caractéristiques subsidiaires avantageuses de l'invention.

On va maintenant décrire un exemple de mise en oeuvre du dispositif de l'invention, en référence aux dessins annexés où les mêmes références numériques désignent d'une figure à l'autre des éléments identiques ou fonctionnellement semblables.

La Figure 1 est une vue d'ensemble montrant le drone et la télécommande associée permettant son pilotage à distance.

La Figure 2 est un chronogramme des trames de commandes régulièrement envoyées de la télécommande au drone.

La Figure 3 illustre la structure générale d'une trame de commande, selon deux types possibles.

La Figure 4 est une représentation schématique sous forme de blocs fonctionnels montrant notamment les différents étages impliqués côté drone pour la mise en oeuvre de l'invention.

Les Figures 5a et 5b sont des chronogrammes illustrant la variabilité des délais entre commandes successives (Figure 5a) et l'évolution du facteur de qualité correspondant obtenu, ainsi que celle de la modulation du débit vidéo (Figure 5b).

Les Figures 6 et 7 sont des chronogrammes montrant les résultats d'essais comparatifs, respectivement sans (Figure 6) et avec (Figure 7) mise en oeuvre de la technique de l'invention, illustrant la variabilité des délais entre commandes successives (Figures 6a et 7a), du facteur de qualité du débit vidéo (Figures 6b et 7b) et des déclenchements du chien de garde de sécurité (Figures 6c et 7c).

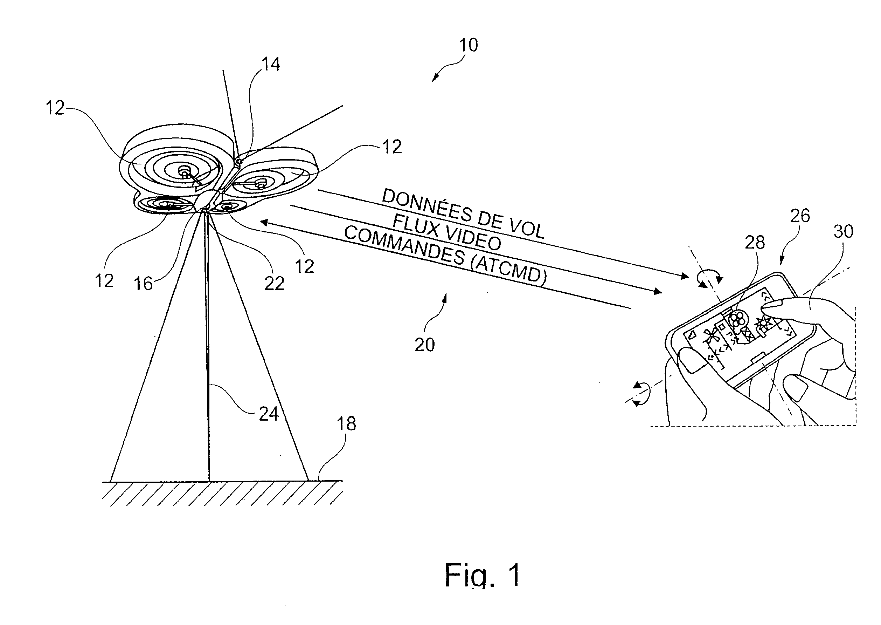

On va maintenant décrire un exemple de mise en oeuvre de l'invention. Sur la Figure 1, la référence 10 désigne de façon générale un drone, qui est par exemple un quadricoptère tel que le modèle *AR.Drone* de Parrot SA, Paris, France. Ce drone 10 comporte quatre rotors coplanaires 12 dont les moteurs sont pilotés indépendamment par un système intégré de navigation et de contrôle d'attitude.

Le drone 10 comporte également une première caméra 14 à visée frontale permettant d'obtenir une image de la scène vers laquelle se dirige le drone, ainsi qu'une seconde caméra 16 à visée verticale pointant vers le bas, apte à capter des images numériques successives du terrain 18 survolé par le drone. La caméra à visée frontale 14 est par exemple une caméra grand angle à capteur CMOS de résolution VGA (640×480 pixels) avec une fréquence de rafraîchissement du flux vidéo de 15 fps (images par seconde).

Le drone 10 est également pourvu d'un altimètre à ultrasons 22, émettant en direction du sol un faisceau 24 permettant de connaître à tout moment l'altitude par rapport au sol, ainsi que de capteurs inertiels (accéléromètres et gyromètres) permettant de mesurer les vitesses angulaires et les angles d'attitude du drone avec une certaine précision.

Le drone 10 est piloté par un appareil de télécommande distant 26 pourvu d'un écran tactile 28 affichant l'image embarquée par la caméra frontale 14, avec en superposition un certain nombre de symboles permettant l'activation de commandes de pilotage par simple contact du doigt 30 d'un utilisateur sur l'écran tactile 28. La télécommande 26 est également pourvue de capteurs d'inclinaison permettant de contrôler l'attitude du drone par des inclinaisons correspondantes de la télécommande selon des axes de roulis et de tangage (on pourra se référer au WO 2010/061099 A2 précité pour plus de détails sur ces aspects du système).

Comme indiqué en introduction, cette télécommande est avantageusement constituée par un téléphone ou baladeur multimédia à écran tactile et accéléromètre intégré, par exemple un téléphone cellulaire de type *iPhone* ou un baladeur ou une tablette multimédia de type *iPod Touch* ou *iPad,* qui sont des appareils incorporant les divers organes de contrôle nécessaires à l'affichage et à la détection des commandes de pilotage, à la visualisation de l'image captée par la caméra frontale, et à l'échange de données avec le drone.

La liaison bidirectionnelle de données entre le drone 10 et la télécommande 26 est une liaison radio sans fil 20 de type réseau local, notamment une liaison de type *Wi-Fi* (IEEE 802.11).

Le drone est également pourvu d'un système de stabilisation autonome en vol stationnaire en l'absence de toute commande extérieure appliquée par un utilisateur.

Cette stabilisation autonome est principalement activée dans deux cas :

- volontairement, lorsque l'utilisateur relève les doigts de l'écran tactile et n'applique donc plus d'ordre de pilotage à la télécommande ;
- automatiquement, par un dispositif de type chien de garde activé en interne par le drone, lorsque celui-ci ne reçoit plus aucune commande pendant une durée prédéterminée, par exemple lorsque le drone n'a reçu aucune commande pendant plus de 300 ms ( pour des commandes émises régulièrement toutes les 30 ms par la télécommande).

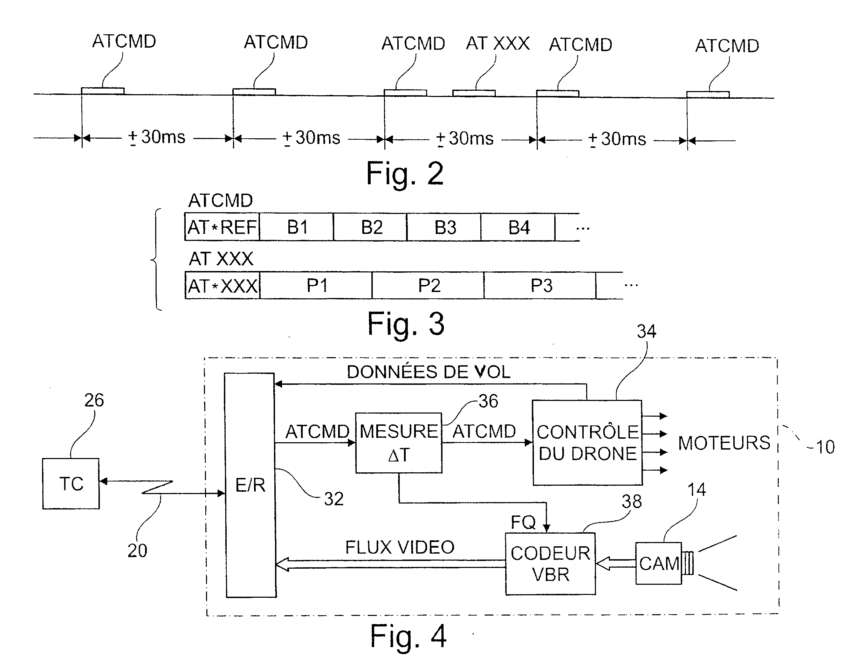

La Figure 2 illustre les trames de commandes reçues par le drone, ces commandes étant générées par la télécommande et transmises au drone par la liaison montante de la transmission radio.

Les commandes reçues comprennent (en l'absence d'interruption de la transmission sur la liaison montante) des trames ATCMD émises par la télécommande à intervalles réguliers, de façon systématique, par exemple toutes les 30 ms. Les commandes comprennent également des commandes spécifiques ATXXX émises en fonction des besoins pour l'envoi d'ordres plus spécifiques ; ces commandes spécifiques ATXXX seront intercalées entre deux commandes ATCMD consécutives.

L'un des points de départ de l'invention est la constatation du fait que les commandes ATCMD émises à intervalles prédéfinis (par exemple de 30 ms) seront reçues par le drone à des intervalles plus ou moins réguliers, dont la variabilité sera fonction de la qualité de la liaison : en cas de saturation du réseau la variabilité autour de la valeur de référence de 30 ms sera élevée, en revanche dans le cas d'un réseau fluide cette variabilité sera beaucoup plus faible.

La Figure 3 illustre de façon générale la structure des trames de commande ATCMD et ATXXX. Ces trames suivent la syntaxe du langage de commande Hayes (ou commandes AT), avec un préambule AT*REF ou AT*XXX indiquant le type de commande, suivi d'un certain nombre de champs B1, B2, B3, B4, ... ou P1, P2, P3, ... propres à chaque type de commande. Les champs B1, B2, B3, B4 correspondront par exemple à l'état des boutons tactiles de la télécommande, tandis que les paramètres P1, P2, P3 des trames intercalaires ATXXX correspondront à différents ordres spécifiques tels que commande d'inclinaison angulaire (modification de l'inclinaison de l'accéléromètre de la télécommande), commutation des caméras frontale/verticale, etc.

Les trames ATCMD sont émises systématiquement, même si l'état des boutons n'est pas modifié (dans ce cas, les trames ATCMD successives sont toutes de contenu identique), en revanche les trames ATXXX sont émises seulement à la demande.

Sur la Figure 4 on a représenté schématique sous forme de blocs fonctionnels les différents étages impliqués notamment côté drone pour la mise en oeuvre de l'invention.

Le drone comporte un circuit émetteur/récepteur 32 assurant l'échange de données avec la télécommande 26 via la liaison réseau bidirectionnelle 20. La liaison réseau bidirectionnelle est ainsi constituée :

- côté liaison montante : un flux de commandes, avec un débit fixe de quelques kbps ;
- côté liaison descendante : un flux vidéo, avec un débit variable de 2,5 à 3 Mbps, et un flux de données de vol, avec un débit fixe de 5 kbps.

Un étage de contrôle de pilotage 34 assure l'envoi de signaux aux quatre moteurs du drone pour contrôler la stabilisation de celui-ci et commander son évolution en fonction des ordres envoyés par l'utilisateur.

Ces ordres comprennent les trames de commandes ATCMD envoyées depuis la télécommande 26 et reçues par le circuit émetteur/récepteur 32. De façon caractéristique, la variabilité de l'intervalle séparant ces trames, c'est-à-dire l'écart $\Delta t$ autour de la valeur nominale de 30 ms, est mesuré par un étage 36, de manière à évaluer la qualité de la liaison montante, et donc le débit binaire globalement disponible en fonction de l'état de congestion du réseau.

Le circuit de pilotage 34 produit également des données de vol qui seront envoyées en retour à la télécommande 26, via la liaison descendante, pour affichage et prise en compte par le logiciel de pilotage.

La caméra vidéo embarquée 14 produit un flux vidéo comprimé par un codeur VBR (*Variable Bit Rate*) 38 d'un type en lui-même connu, par exemple un codeur de la bibliothèque *FFmpeg,* opérant une compression à débit variable, mais à fréquence de rafraîchissement d'image constante, par exemple 15 fps (images par seconde).

Le taux de compression, et donc le débit du flux vidéo en sortie du codeur VBR 38, est contrôlé par un signal externe FQ qui, de façon caractéristique de l'invention, est ici un paramètre dérivé d'un estimateur de qualité de la liaison réseau, estimateur obtenu par mesure des intervalles $\Delta t$ par le bloc 36.

Dans le cas présent, il est proposé de construire un estimateur de qualité de la liaison réseau basé sur la variance des délais entre deux commandes ATCMD.

La variance caractérise la dispersion des instants de réception des commandes ATCMD (dispersion autour du délai nominal de 30 ms), la dispersion augmentant dans des proportions beaucoup plus importantes en cas de perte de transmission de certaines commandes de la télécommande vers le drone : dans ce cas-là l'écart entre deux ATCMD successivement reçues peut atteindre 30, 90, 120 ms, ....

Au départ, l'estimateur de qualité est initialisé à une valeur nulle (correspondant à une qualité maximale).

La variance est ensuite calculée en continu sur les dix derniers délais entre commandes ATCMD consécutives. On soustrait ensuite une variance de référence, majorée de 25 % (la variance de référence étant une valeur déterminée au préalable, dans des conditions de réception optimales, avec le drone posé à côté de la télécommande, et une qualité vidéo maximale, c'est-à-dire dans des conditions optimales, sans perturbations et avec le maximum de débit binaire disponible). Puis le résultat de cette différence (entre la variance mesurée et la variance de référence majorée) est ajouté à l'estimateur de qualité.

Lorsque la qualité diminue par rapport à la situation optimale, la différence précitée augmente, et donc aussi l'estimateur de qualité. Ceci indique une dégradation de la liaison (une valeur élevée de l'estimateur de qualité correspondant à une liaison dégradée). Inversement, lorsque la variance des délais entre commandes ATCMD se rapproche de la variance de référence, l'estimateur de qualité décroît, et la liaison est estimée de meilleure qualité.

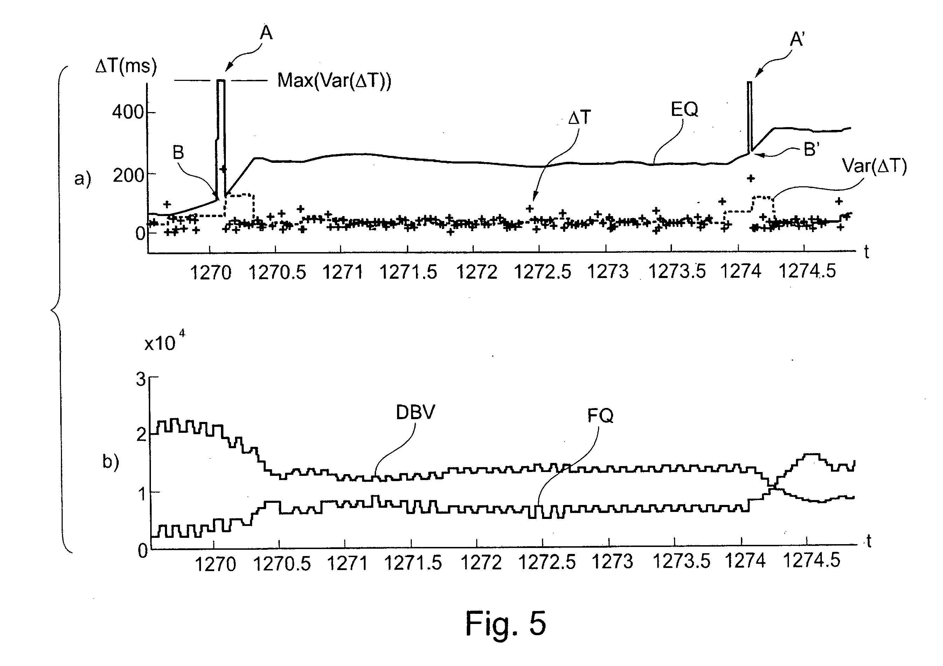

Ceci est illustré sur la Figure 5a, où l'on a représenté par des "+" les valeurs successives des intervalles entre commandes ATCMD successives (valeurs qui varient typiquement, dans l'exemple illustré, entre 0 et 200 ms). On a également représenté la variance Var(Δt) calculée sur les dix derniers délais Δt, et l'estimateur de qualité EQ obtenu de la manière indiquée plus haut.

Les valeurs Δt supérieures à 30 ms correspondent en fait à des situations de perte de transmission sur la liaison montante, qui font en sorte que certaines des trames ATCMD sont perdues et ne sont pas reçues par le drone.

Selon un aspect de l'invention, il est avantageusement prévu une sécurité consistant à forcer l'estimateur au maximum lorsqu'aucune commande ATCMD n'est reçue depuis par exemple plus de 200 ms. La valeur maximale est par exemple fixée à Max(Var(Δt)) = 500, et correspond aux situations repérées A et A' sur la Figure 5a.

Cette sécurité est destinée à prévenir, si possible, le déclenchement du chien de garde (réglé ici à 300 ms, soit une valeur supérieure à la limite de déclenchement de la sécurité). Ce forçage de l'estimateur de qualité permet de dégrader volontairement la qualité apparente de la liaison vidéo, et donc du débit nécessaire côté liaison descendante, de manière à réserver côté liaison montante un débit suffisant pour la transmission des commandes.

Si toutefois une commande ATCMD est reçue après cet intervalle de 200 ms et avant le déclenchement du chien de garde (réglé à 300 ms), alors l'estimateur de qualité est rétabli à sa valeur calculée, dont l'évolution a continué à être évaluée en tâche de fond (comme illustré en B et B' sur la Figure 5a).

La Figure 5b illustre la manière dont le débit vidéo DBV peut être modulé en fonction du paramètre de facteur de qualité FQ appliqué en entrée du circuit de codage à débit variable 38, facteur lui-même calculé à partir de l'estimateur de qualité de la manière que l'on va maintenant décrire.

Une fois l'estimateur de qualité EQ évalué de la manière indiquée plus haut, un poids par image est attribué par le codeur de la façon suivante :

$$VF = VF_{max} \cdot [(EQ_{max} - EQ) / EQ_{max}],$$

VF étant la taille d'une trame vidéo générée par le codeur,
$VF_{max}$ étant la taille d'une trame vidéo obtenue lorsque la qualité de la liaison réseau est maximale (valeur déterminée préalablement de la même manière que pour la variance de référence indiquée plus haut),
EQ étant la valeur courante de l'estimateur de qualité, et
$EQ_{max}$ étant une valeur paramétrable permettant de rendre l'algorithme plus ou moins réactif (une valeur élevée de $EQ_{max}$ permettra des transitions douces entre une vidéo de bonne qualité et une vidéo dégradée, mais s'adaptera en revanche moins vite aux variations de débit binaire du réseau) ; dans les exemples qui seront donnés ci-après, on fixera la valeur $EQ_{max}$ = 500.

La Figure 5b montre que, lorsque la liaison se dégrade (augmentation de FQ), le débit binaire du flux vidéo DBV en sortie du codeur diminue corrélativement, réduisant ainsi les besoins en débit binaire pour la liaison vidéo descendante, du drone vers la télécommande.

Cette Figure 5b, qui illustre l'activité du codeur vidéo 38, montre notamment, entre les instants t = 1270 et t = 1274 que, bien que les délais entre commandes ATCMD restent satisfaisants (inférieurs à 100 ms dans l'ensemble), le facteur de qualité se maintient à une certaine valeur, empêchant la transmission d'une image trop détaillée. Ceci tient au fait que le système prend en compte les irrégularités dans la périodicité des commandes ATCMD, révélatrices d'un réseau perturbé, et maintient donc le débit vidéo DBV à une valeur basse, ce qui permettra notamment d'anticiper la perte de communication qui surviendra à l'instant t = 1274.

*Exemple*

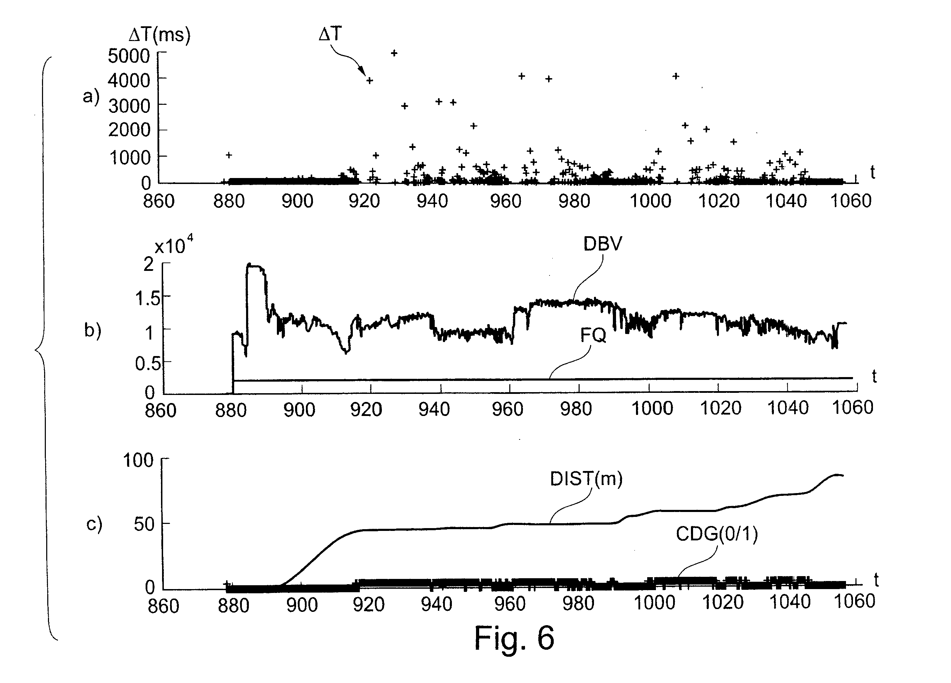

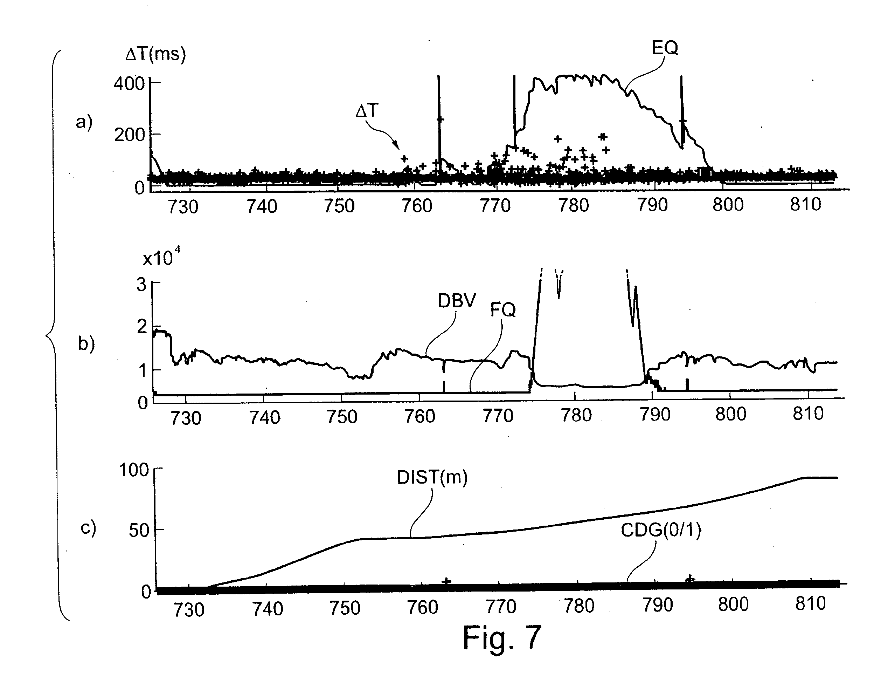

On va maintenant décrire un exemple de mise en oeuvre de l'invention, en référence aux Figures 6 et 7 qui présentent des chronogrammes comparatifs, respectivement sans (Figure 6) et avec (Figure 7) mise en oeuvre de l'invention.

Le test effectué en conditions réelles correspond à un trajet aller-retour du drone avec une traversée en vue directe d'une cinquantaine de mètres (approximativement entre les instants t = 880 et t = 920), suivie d'un retour en slalomant autour d'obstacles, avec de nombreuses périodes pendant lesquelles le drone n'est pas visible par l'utilisateur (approximativement entre les instants t = 920 et t = 1050).

Les Figure 6a et 7a illustrent les valeurs des intervalles Δt entre commandes ATCMD successivement reçues.

Les Figures 6b et 7b illustrent le débit vidéo instantané DBV en sortie du codeur VBR, ainsi que le facteur de qualité FQ contrôlant ce même codeur.

Les Figures 6c et 7c indiquent les déclenchements du chien de garde de sécurité (CDG = 0 : non déclenché ; CDG = 1 : déclenché), ainsi que la distance DIST parcourue par le drone, en valeur cumulée depuis le départ.

Sur la Figure 6, correspondant à l'état de la technique (sans mise en oeuvre de l'invention), on constate que pour la première partie du vol (traversée aller de 0 à 50 m, approximativement jusqu'à t = 916), le vol se passe sans encombres, la valeur Δt reste toujours extrêmement faible (Figure 6a). La qualité de la liaison vidéo reste élevée, quoique variable en fonction de la complexité de la scène (Figure 6b), et le chien de garde ne se déclenche pas (Figure 6c).

En revanche, le retour du drone s'avère extrêmement difficile, avec de très nombreuses pertes de liaison (l'intervalle Δt pouvant atteindre plusieurs secondes) ce qui provoque des déclenchements multiples du chien de garde (Figure 6c) se traduisant par de multiples passages en point fixe, obligeant l'utilisateur à se rapprocher du drone avec sa télécommande pour rétablir le contact et terminer le parcours.

On notera en outre que le passage en point fixe du fait du déclenchement du chien de garde ne modifie pas le débit vidéo ; bien au contraire, une image stabilisée du fait du point fixe présente plus de détails, ce qui conduit à une augmentation du débit vidéo accroissant la congestion du réseau.

La Figure 7 illustre les mêmes paramètres, mais avec un contrôle de débit vidéo selon l'invention.

Comme on peut le remarquer, le vol s'effectue pratiquement sans aucun déclenchement du chien de garde, hormis deux déclenchements sporadiques à t = 763 et t = 795. Dans les passages difficiles, entre t = 770 et t = 790, malgré une dégradation de la liaison radio (révélée par une forte augmentation de l'estimateur de qualité EQ), la réduction du débit vidéo DBV (Figure 7b) permet de réserver aux commande de pilotage suffisamment de débit binaire sur une liaison montante de bonne qualité, permettant à l'utilisateur de terminer le parcours sans qu'il ait besoin de rapprocher la télécommande du drone.

On notera en particulier que les intervalles Δt entre commandes ATCMD successives (Figure 7a) restent cantonnés à des valeurs faibles, généralement inférieures à 200 ms (au lieu de plusieurs secondes en l'absence de contrôle du débit vidéo), et ne dépassant que très exceptionnellement la valeur limite de 300 ms provoquant le déclenchent du chien de garde.

## Revendications

1. Un procédé de transmission de commandes et d'un flux video entre un drone (10) et une télécommande distante (26) par une liaison bidirectionnelle de type réseau sans fil (20),
   le drone comprenant une caméra video embarquée (14) et des moyens (38) de compression du flux video capté par cette caméra, aptes à produire un flux vidéo compressé,
   la liaison bidirectionnelle comprenant :

   - une liaison montante pour la transmission au drone de messages de commande (ATCMD) sous forme de trames de données émises à intervalles prédéterminés, et
   - une liaison descendante pour la transmission à la télécommande du flux video compressé (FLUX VIDEO) produit par le drone,

   ce procédé comprenant des étapes de :

   - mesure d'un niveau de qualité de ladite liaison bidirectionnelle;
   - calcul d'un estimateur (EQ) fonction du niveau de qualité mesuré ; et
   - modulation du débit binaire (DBV) du flux video compressé émis par le drone sur la liaison descendante, dans le sens d'une diminution de ce débit binaire lorsque l'estimateur indique une dégradation de la qualité de la liaison entre drone et télécommande, et vice versa,

   procédé **caractérisé en ce que** :

   - la télécommande émet lesdits messages de commande (ATCMD) de façon répétée à intervalles nominaux constants, et
   - la mesure du niveau de qualité de la liaison bidirectionnelle est une mesure du niveau de qualité de la liaison montante opérée par le drone à partir d'une mesure de la variabilité des intervalles (ΔT) réparant les trames successives effectivement reçues par le drone, déterminée à partir de la variance (Var(ΔT)) des intervalles (ΔT) séparant les trames successives effectivement reçues par le drone sur un nombre prédéterminé de trames antérieures, sans mise en oeuvre d'une liaison de contrôle retour additionnelle de le télécommande vers le drone.

2. Le procédé de la revendication 1, dans lequel :

   - la mesure du niveau de qualité comprend en outre la détermination préalable d'une variance de référence obtenue dans des conditions de transmission optimales, et
   - l'estimateur est calculé en fonction de l'écart entre la variance courante et la variance de référence.

3. Le procédé de la revendication 1, dans lequel lesdites étapes de mesure du niveau de qualité, de calcul de l'estimateur et de modulation du débit binaire sont mises en oeuvre au sein de circuits (36, 58) du drone.

4. Le procédé de la revendication 1, comprenant en outre, en cas d'absence de réception par le drone de toute trame de données pendant une durée prédéterminée, une étape de forçage dudit estimateur à une valeur maximale (Max(Var(∆T))) prédéterminée.

**5.** Le procédé de la revendication 4, dans lequel ladite étape de forçage est une étape limitée dans le temps, et mise en oeuvre tout en poursuivant en tâche de fond la mesure du niveau de qualité.

**6.** Le procédé de la revendication 1, dans lequel la modulation du débit binaire du flux video compressé est obtenue par modulation du taux de compression du flux video capté par la caméra, à fréquence d'images constante.

**7.** Le procédé de la revendication 1, dans lequel ladite modulation du débit binaire du flux video compressé est pondérée en fonction de l'écart entre la valeur courante de l'estimateur et une valeur limite prédéterminée de l'estimateur.

**8.** Le procédé de la revendication 1, comprenant en outre la transmission par la liaison descendante, à débit binaire constant, de données (DONNÉES DE VOL) représentatives de paramètres de vol du drone.

**Patentansprüche**

**1.** Verfahren zum Übertragen von Befehlen und eines Videostroms zwischen einer Drohne (10) und einer entfernten Fernsteuerung (26) über eine bidirektionale Verbindung des Typs drahtloses Netz (20), wobei die Drohne eine bordinterne Videokamera (14) und Mittel (38) für die Kompression des von dieser Kamera aufgenommenen Videostroms, die einen komprimierten Videostrom erzeugen können, enthält, wobei die bidirektionale Verbindung Folgendes umfasst:

- eine Aufwärtsstreckenverbindung für die Übertragung von Steuernachrichten (ATCMD) in Form von Datenrahmen, die in vorgegebenen Intervallen ausgesendet werden, zu der Drohne und
- eine Abwärtsstreckenverbindung für die Übertragung des komprimierten Videostroms (FLUX VIDEO), der von der Drohne erzeugt wird, zu der Fernsteuerung,

wobei dieses Verfahren die folgenden Schritte umfasst:

- Messen eines Gütegrades der bidirektionalen Verbindung;
- Berechnen einer Schätzung (EQ) als Funktion des gemessenen Gütegrades; und

- Modulieren des Binärdurchsatzes (DBV) des komprimierten Videostroms, der von der Drohne ausgesendet wird, auf der Abwärtsstreckenverbindung in Richtung einer Verringerung dieses binären Durchsatzes, wenn die Schätzung eine Verschlechterung der Güte der Verbindung zwischen der Drohne und der Fernsteuerung angibt, und umgekehrt,

wobei das Verfahren **dadurch gekennzeichnet ist, dass**:

- die Fernsteuerung Steuernachrichten (ATCMD) wiederholt in konstanten Nominalintervallen aussendet, und
- die Messung des Gütegrades der bidirektionalen Verbindung eine Messung des Gütegrades der Aufwärtsstreckenverbindung, die von der Drohne betrieben wird, anhand einer Messung der Variabilität von Intervallen (∆T), die aufeinander folgende Rahmen, die von der Drohne effektiv empfangen werden, trennen, und anhand der Varianz (Var(∆T)) der Intervalle (∆T), die die aufeinander folgenden Rahmen, die von der Drohne effektiv empfangen werden, trennen, an einer vorgegebenen Anzahl früherer Rahmen ohne Ausführung einer zusätzlichen Rückkehrsteuerungsverbindung von der Fernsteuerung zu der Drohne ist.

**2.** Verfahren nach Anspruch 1, wobei:

- die Messung des Gütegrades außerdem die vorherige Bestimmung einer Referenzvarianz, die unter optimalen Übertragungsbedingungen erhalten wird, umfasst, und
- die Schätzung als Funktion des Abstands zwischen der aktuellen Varianz und der Referenzvarianz berechnet wird.

**3.** Verfahren nach Anspruch 1, wobei die Schritte des Messens des Gütegrads, des Berechnens der Schätzung und des Modulierens des binären Durchsatzes innerhalb von Schaltungen (36, 58) der Drohne ausgeführt werden.

**4.** Verfahren nach Anspruch 1, das außerdem dann, wenn von der Drohne während einer vorgegebenen Dauer keinerlei Datenrahmen empfangen wird, einen Schritt umfasst, um die Schätzung auf einen vorgegebenen Maximalwert (Max(Var(∆T))) zu zwingen.

**5.** Verfahren nach Anspruch 4, wobei der Erzwingungsschritt ein zeitlich begrenzter Schritt ist und unter Fortsetzung der Messung des Gütegrads als Hintergrundaufgabe ausgeführt wird.

**6.** Verfahren nach Anspruch 1, wobei die Modulation des binären Durchsatzes des komprimierten Videostroms durch Modulation des Kompressionsanteils des von der Kamera aufgenommenen Videostroms mit konstanter Bildfrequenz erhalten wird.

**7.** Verfahren nach Anspruch 1, wobei die Modulation des binären Durchsatzes des komprimierten Videostroms als Funktion des Abstands zwischen dem aktuellen Wert der Schätzung und einem vorgegebenen Grenzwert der Schätzung gewichtet wird.

**8.** Verfahren nach Anspruch 1, das außerdem das Übertragen über die Abwärtsstreckenverbindung mit konstantem binären Durchsatz von Daten (DONNÉES DE VOL), die Flugparameter der Drohne präsentieren, umfasst.

**Claims**

**1.** A method of transmitting controls and a video flux between a drone (10) and a remote control (26) via a bidirectional link of the wireless network type (20), the drone comprising an on-board video camera (14) and means (38) for compressing the video flux picked up by the camera, adapted to produce a compressed video flux,
the bidirectional link comprising:

- an uplink for transmitting to the drone control messages (ATCMD) as data frames emitted at predetermined intervals, and
- a downlink for transmitting to the remote control the compressed video flux (VIDEO FLUX) produced by the drone,

the method comprising the steps of:

- measuring a level of quality of said bidirectional link;
- calculating an estimator (EQ) based on the measured level of quality; and
- modulating the bit rate (DBV) of the compressed video flux emitted by the drone on the downlink, in the direction of reduction of this bit rate when the estimator indicates a degradation of quality of the drone-remote control link, and *vice versa,*

the method being **characterized in that**:

- the remote control emits repeatedly said control messages (ATCMD) at constant nominal intervals, and
- the measurement of the level of quality of the bidirectional link is a measurement of the level of quality of the uplink operated by the drone based on a measurement of the variability of the intervals (ΔT) separating the successive frames effectively received by the drone, determined based on the variance (Var(ΔT)) of the intervals (ΔT) separating the successive frames effectively received by the drone on a predetermined number of previous frames, without implementing an additional return control link from the remote control to the drone.

**2.** The method of claim 1, wherein:

- the measurement of the level of quality further comprises the previous determination of a reference variance obtained in optimal transmission conditions, and
- the estimator is calculated as a function of the difference between the current variance and the reference variance.

**3.** The method of claim 1, wherein said steps of measuring the level of quality, calculating the estimator and modulating the bit rate are implemented in circuits (36, 58) of the drone.

**4.** The method of claim 1, further comprising, in case of absence of reception by the drone of any data frame during a predetermined duration, a step of forcing said estimator to a predetermined maximum value (Max(Var(T))).

**5.** The method of claim 4, wherein said step of forcing is a step limited in time, and implemented while continuing in background the measurement of the level of quality.

**6.** The method of claim 1, wherein the modulation of the bit rate of the compressed video flux is obtained by modulating the compression rate of the video flux picked up by the camera, at a constant image rate.

**7.** The method of claim 1, wherein said modulation of the bit rate of the compressed video flux is weighted as a function of the difference between the current value of the estimator and a predetermined limit value of the estimator.

**8.** The method of claim 1, further comprising the transmission via the downlink, at constant bit rate, of data (FLIGHT DATA) representative of flight parameters of the drone.

DONNÉES DE VOL
FLUX VIDEO
COMMANDES (ATCMD)

10

12

14

12

12

12

16

22

24

18

20

26

28

30

Fig. 1

**Fig. 2**

ATCMD — ATCMD — ATCMD — AT XXX — ATCMD — ATCMD

± 30ms   ± 30ms   ± 30ms   ± 30ms   ± 30ms

**Fig. 3**

ATCMD

| AT*REF | B1 | B2 | B3 | B4 |
|---|---|---|---|---|

AT XXX

| AT*XXX | P1 | P2 | P3 | ... |
|---|---|---|---|---|

**Fig. 4**

10

DONNÉES DE VOL

CONTRÔLE DU DRONE → MOTEURS   34

MESURE ΔT   36

ATCMD

ATCMD

CAM   14

CODEUR VBR   38

FQ

FLUX VIDEO

E/R   32

TC   26

20

Fig. 5

Fig. 6

EP 2 450 862 B1

Fig. 7

**RÉFÉRENCES CITÉES DANS LA DESCRIPTION**

**Documents brevets cités dans la description**

- WO 2010061099 A2
- US 20090185617 A
- EP 2075960 A1
- US A1 A